# EUROPEAN PATENT SPECIFICATION

(11) **EP 0 761 350 B1**
(45) Date of publication and mention of the grant of the patent: **21.02.2001**
(21) Application number: 96305718.7
(22) Date of filing: 02.08.1996
(51) Int. Cl.: B23B 45/00, B25F 5/00, F16D 59/00

(54) **A locking device**
Arretierungseinrichtung
Dispositif de blocage

(30) Priority: 03.08.1995 JP 21972695
(43) Date of publication of application: 12.03.1997
(73) Proprietor: Mura Gijutsu Sogo Kenkyusho Co Ltd, Kobe, Hyogo (JP)
(72) Inventor: Nakamura, Daijiro, c/o Mura Gijutsu Sogo, Kobe, Hyogo (JP)
(74) Representative: Warren, Keith Stanley

(56) References cited:
- DE-A- 3 742 163
- US-A- 4 400 995

## Description

The present invention relates to a locking device on the output shaft of a power tool, capable of stopping the output shaft promptly when the motor is controlled to stop.

In manual work, for instance, various tools are mounted on the output shaft of a power tool using a mounting chuck. With such tools, if the power is turned off, the output shaft continues to rotate due to inertia. If a user's hold on the power tool is released during this rotation, the tool will rotate dangerously. It would therefore be preferable for the rotation of the output shaft to be stopped substantially immediately the power is turned off.

Known chucks comprise a "torque-up" function, in which the tool is tightened or detached by turning the operation ring by hand, without having to use a chuck handle. However, when using such a chuck while the power tool is switched off, the output shaft of the power tool is free to rotate, and if hand tightening,of the chuck is attempted the output shaft also rotates and the chuck cannot easily be tightened by hand. At present a user needs to hold the output shaft with one hand while tightening the chuck, resulting in poor controllability.

US-A-4 400 995 discloses a manually actuable locking member which rotates with an output shaft and which has a blocking member extending therefrom with an opening for receiving a lock pin when the blocking member is at rest or rotating slowly. The ends of a recess provided in the locking member impact on the lock pin when the lock pin is situated in the opening. When the shaft is operating at normal speed, the opening prevents the lock pin from entering therein so that the blocking member and shaft can rotate.

It is a primary object of the invention to provide a locking device for an output shaft capable of both stopping the output shaft substantially immediately the output shaft is controlled to stop, and locking the output shaft so as not to rotate while the output shaft is stopped.

It is a further different object of the invention to present a locking device for an output shaft which prevents damage by stopping gradually, using a torque limiter or brake, if there is risk of damage due to overload of the output shaft. Accordingly, the invention consists in a locking device on the output shaft of a power tool, wherein the output shaft is formed by connection of a drive shaft and a coaxial driven shaft,
a rotational play of a specific angle being allowed between the drive shaft and the driven shaft, a holding plate being fixed to the driven shaft facing said drive shaft in the axial direction,
an annular locking ring mounted at the holding plate side facing said drive shaft and having on the side facing the holding plate, a plurality of regulation pins which loosely fit corresponding regulation holes in the holding plate on its side facing the regulation pins, whilst allowing the locking ring to be movable between the concentric and eccentric positions, the locking ring having a locking pawl on an outer circumference thereof,
a locking member being provided in the drive shaft facing said locking ring, for allowing the locking ring to move to the concentric position when the play at the junction of the drive shaft and driven shaft is eliminated by initial rotation of the drive shaft, and causing the locking ring to move to the eccentric position when rotation of the drive shaft is stopped and a play at the junction of said shaft is reintroduced, and
an internal ring forming a pawl for locking mutual rotation by mutual engagement with the locking pawl on the locking ring when said locking ring is moved to the eccentric position.

Preferably, in the locking device of the output shaft, the internal ring is held rotatably in the fixing part, and a torque limiter is formed by pressing and fixing the internal ring with a specified load, and also in the locking device of output shaft, the internal ring is held rotatably in the fixing part, and a brake is formed by pressing and fixing the internal ring with a specified load.

Embodiments of the invention will now be described, with reference to the accompanying drawings, in which:
Fig. 1 is a sectional view of a locking device in accordance with the present invention;
Fig. 2 is a partial exploded view of the locking device of Fig.1;
Fig. 3 is an inner side view of a carrier;
Fig. 4 is a perspective view of torque limiter
Fig. 5 is a sectional view of spline fitting part of the carrier of Fig. 3 and an output shaft;
Fig. 6 is a sectional view showing the locking device of Fig. 1 in a locked state;
Fig. 7 is an outer side view showing the locking device of Fig. 1 in a locked state;

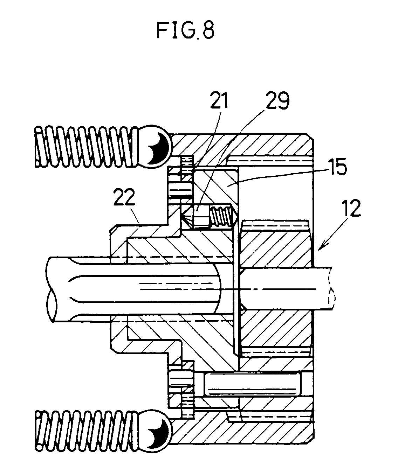

Fig. 8 is a sectional view showing the locking device of Fig. 1 in an unlocked state;

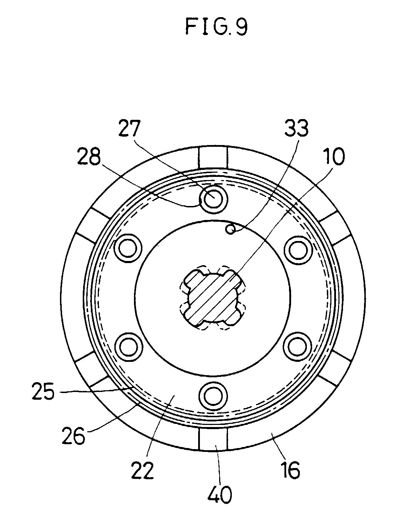

Fig. 9 is an outer side view showing the locking device of Fig. 1 in an unlocked state;
Fig. 10 is a sectional view of another embodiment of a locking device in accordance with the present invention in a locked state; and
Fig. 11 is a sectional view of the locking device of Fig.10 in an unlocked state.

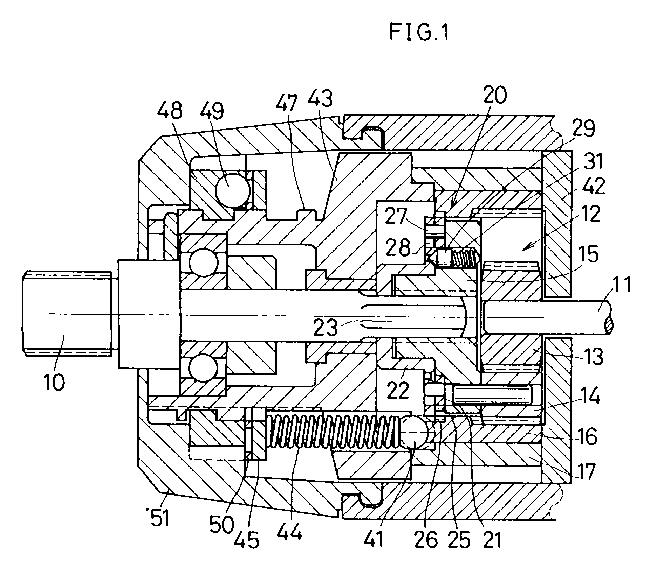

A locking device for an output shaft of a hand held power tool is shown in Fig. 1. In the tool, the output shaft 10 is driven by rotation of a motor shaft 11 of a motor (not shown), and between the motor shaft 11 and the output shaft 10, there is a locking device incorporating a reduction mechanism.

The motor shaft 11 is connected to an inner gear 13 of a gear mechanism 12 so as to transmit rotation. The gear mechanism comprises, aside from the inner gear 13, an outer gear 14 engaged with the inner gear 13 and a carrier 15 on which the outer gear 14 is provided. An internal gear 16 is engaged with the outer gear 14, and a fixing ring 17, and having a known reduction function, its reduction output being produced from the carrier 15.

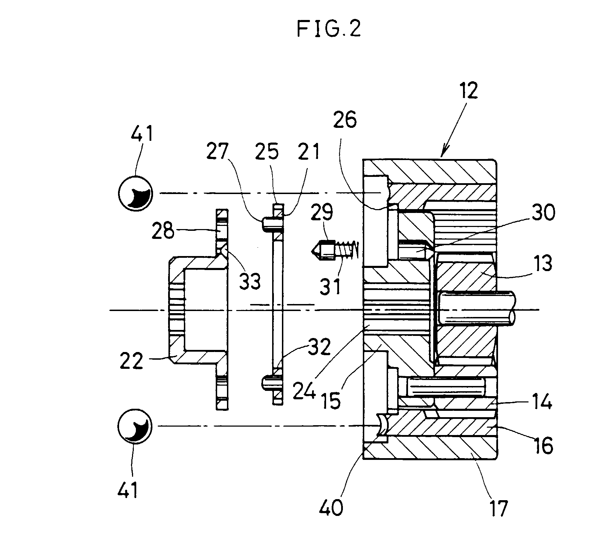

A locking device 20 for locking the output shaft 10 is shown in Figs. 1 and 2 and comprises the carrier 15, a locking ring 21 opposite thereto, a holding plate 22, having a flanged cap shape, for holding it and the internal gear 16 for locking the locking ring 21 against rotation.

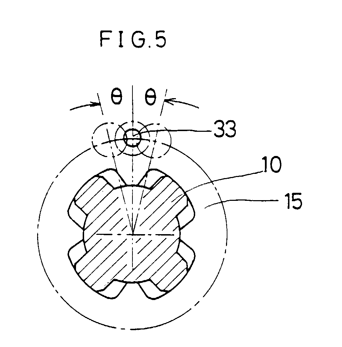

The axial center of the carrier 15 and the inner end of the output shaft 10 are connected so as to transmit rotation by mutual fitting through splines 23, 24. The spline fittings 23, 24 form a play of a specific angle θ in both forward and reverse rotational directions, from a neutral position, as shown in Fig. 5.

The central part of the holding plate 22 is fitted without play to the spline 23 of the output shaft 10, and fixed so as to rotate together with the shaft 10.

The carrier 15 may be considered as the drive side, and the output shaft 10 as the driven side. The holding plate 22 is fixed to the inner side of the output shaft 10 on the driven side opposite, in the axial central direction, to the drive side carrier 15.

The locking ring 21 forms a gear 25 having the locking pawl on its outer circumference, which is supported to enable radial movement between a concentric position and an eccentric position on the shaft of the carrier 15. When the locking ring 21 moves to the eccentric position, the gear 25 is engaged with a gear 26 of the internal gear 16 on the outer circumference, thereby locking rotation of the locking ring 21.

Also, on the side facing the holding plate 22 of the locking ring 21, a plurality of regulation pins 27 are provided. On the side of the holding plate 22 facing the regulation pins 27 regulation holes 28 are provided, for loosely fitting the regulation pins 27. The regulation holes 28 have a diameter or size for regulating the position of the regulation pins 27, so that the locking ring 21 may be movable between the eccentric and concentric positions.

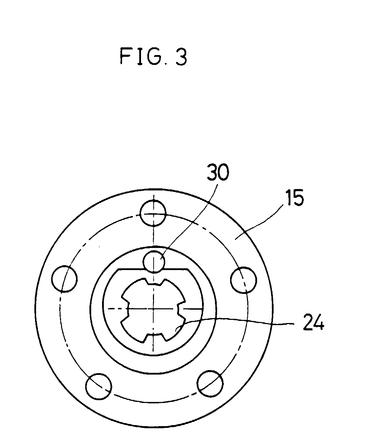

On the side of the carrier 15 facing the holding plate 22, as shown also in Fig. 3, there is an accommodation hole 30 for accommodating an operation pin (locking member) 29, which is slidably received in the axial central direction. The operation pin 29 is urged towards the holding plate 22 by a spring 31.

The leading end of the operation pin 29 is formed in a conical form, and this conical side contacts the inner circumference 32 of the locking ring 21. Urging by the operation pin 29, in the axial direction, causes the locking ring 21 to be moved to the eccentric position.

That is, as shown in Fig. 5, an engagement hole 33 to be engaged with the conical side of the operation pin 29 is formed in the holding plate 22 facing the operation pin 29, when the holding plate 22 is in a neutral position with respect to the output shaft 10 of the carrier 15. When the operation pin 29 is engaged with the engagement hole 33 and is urged by the spring 31, it contacts with the inner circumference 32 of the locking ring 21 on the conical side of the leading end, and presses it in the outer circumferential direction. Thus the locking ring 21 is moved to the eccentric position, and the gear 25 on its outer circumference is engaged with the gear 26 of the internal gear 16, thereby locking the rotation of the locking ring 21.

When the carrier 15 rotates, for example, in the forward or reverse direction under the influence of the motor shaft 11, and turns by the play angle θ against the holding plate 22, the leading end of the operation pin 29 is detached from the engagement hole 33 against the force of the spring 31, and rides on the side surface of the holding plate 22, the conical side of the operation pin 29 being detached from the inner circumference 32 of the locking ring 21. The locking ring 21 is thereby allowed to move to the concentric position with the output shaft 10 and the locking ring 21 does not prevent rotation of the output shaft 10.

In this case, when torque is transmitted to the locking ring 21 (transmission from the holding plate 22 side), since the locking ring 21 is formed in a ring form of nearly equal circumference, a centripetal force acts by its rotation to rotate at the concentric position with the output shaft 10, so that the gear 25 of the outer circumference will not be engaged with the gear 26 of the internal gear 17.

In the gear mechanism 12, the internal gear 16 is freely supported on the fixing ring 17, the outer end of the internal gear 16 is formed in a rough surface 40, and a ball 41 is bonded therewith to press the internal gear 16 to the fixing plate 42 side, and by defining its rotation, a torque limiter is composed.

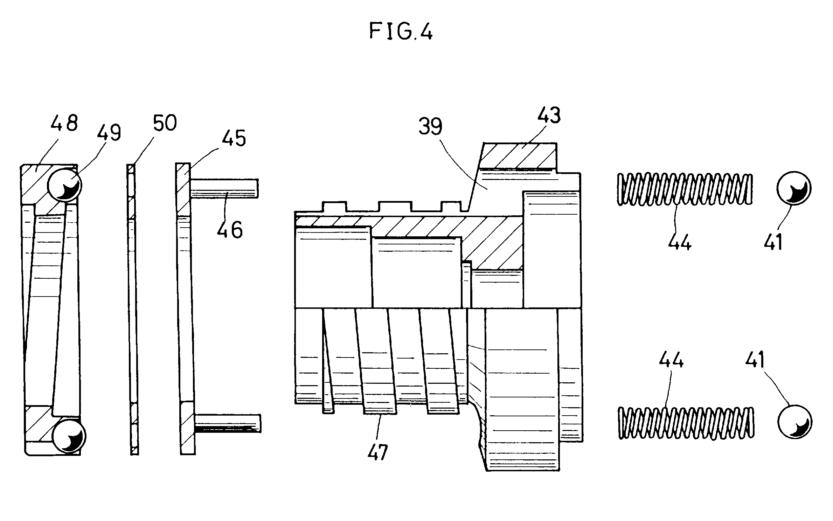

As shown also in Fig. 4, a plurality (for example, six) balls 41 facing each other, and a fixing member 43 is located opposite to this position facing the outer end of the internal gear 16. At the side opposite to the internal gear 16 of the fixing member 43 and at the position corresponding to the ball 41, a spring 44 for pressing the ball 41 is accommodated, the outer end of the spring 44 being supported by a support pin 46 of a receiving member 45.

A screw thread 47 of square section is formed on the outer circumference of the fixing member 43, and a nut member 48 is engaged with the screw thread 47, the backward movement of the nut member 48 being transmitted through a ball 49 and a ring 50 to move the receiving member 45 in the axial direction. Therefore, by adjusting the elasticity of the spring 44, the torque of the torque limiter can be adjusted by the rough surface 40 of the internal gear 16 and the balls 41.

The nut member 48 is connected to the operation cover 51, for example, by spline fitting, so that the rotation may be transmitted, while allowing sliding in the axial direction, and by rotating the operation cover 51, the nut member 48 may be rotated. Meanwhile, the fixing plate 42, fixing ring 17, and fixing member 43 are integrally coupled by a proper linkage mechanism.

The operation of the locking device is described below.

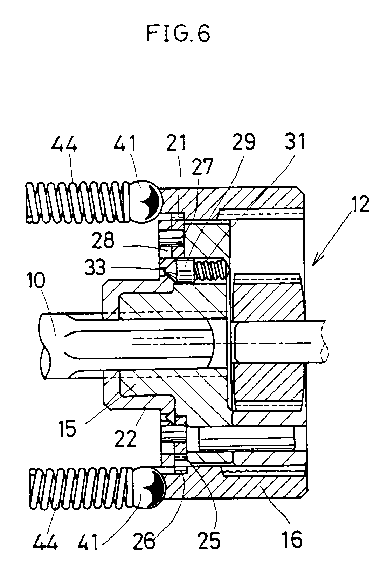

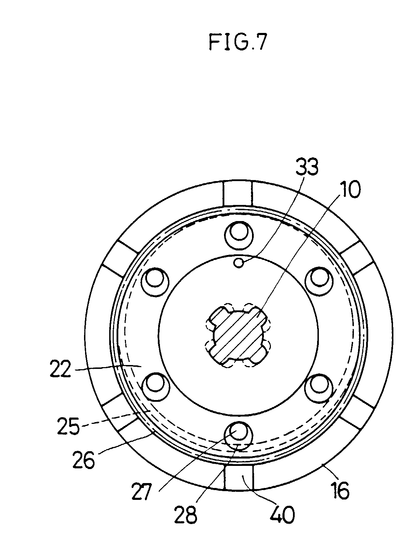

With the assistance of Figs. 1, 6, and 7, it can be seen that when the motor shaft 11 is stopped, the operation pin 29 presses the inner circumference 32 of the locking ring 21 to an eccentric position and the leading end of the pin 29 is urged into engagement in the engagement hole 33 of the holding plate 22. Accordingly, the gear 25 of the locking ring 21 is engaged with the gear 26 of the internal gear 16 and is hence locked.

In this state, when manual force is applied, for example, through movement of the output shaft 10, this force will not turn the carrier 15 which has a play angle θ, but since there is no play angle against the holding plate 22, this holding plate 22 receives the torque of the output shaft 10, and the torque is transmitted to the locking ring 21 through the regulation hole 28 and regulation pin 27. However, since the gear 25 of the locking ring 21 is engaged with the gear 26 of the internal gear 16, which is defined of rotation by the elasticity of the spring 44, as mentioned above, it will not be rotated. Therefore, the output shaft 10 is in a locked state, and manual rotation is prevented.

Incidentally, when the manual rotational force through the output shaft 10 exceeds the elastic force by the spring 44, the internal gear 17 turns by resisting the pressure of the spring 44, so that the torque limiter functions.

Thus, when rotation of the output shaft 10 is attempted in the locked state, the output shaft 10 does not turn, and hence it is easier to mount a tool on this output shaft 10.

In this way, when the output shaft 10 locked, rotation by the motor shaft 11, directly drives the motor shaft 11 which is turned in a specified direction.

This rotation of the motor shaft 11 is reduced by the gear mechanism 12 and is produced from the carrier 15, but since there is a play angle θ between the carrier 15 and splines 23, 24 of the output shaft 10, first the carrier 15 turns by a portion of this play angle θ, then the torque is transmitted to the output shaft 10. When the carrier 15 turns by the portion of the play angle θ, the operation pin 29 is detached from the engagement hole 33 by resisting the spring 31, and rides on the side of the holding plate 22, and thereby the conical side of the operation pin 29 is detached from the inner circumference 32 of the locking ring 21, so that the locking ring 21 is allowed to move to the concentric position with the output shaft 10.

In this case, when the torque is transmitted to the locking ring 21 (transmitted from the holding plate 22 side), since the locking ring 21 is formed in a ring of a nearly uniform circumference, a centripetal force acts by its rotation to turn at the concentric position with the output shaft 10, and the gear 25 of its outer circumference will not be engaged with the gear 26 of the internal gear 17.

As a result, the locked state of the locking ring 21 is cleared, and the output shaft 10 is rotated by the driving force of the motor shaft 11. In the driven state of the output shaft 10, meanwhile, when an overload acts on the output shaft 10 and this load exceeds the elastic force by the spring 44, the internal gear 16 turns by resisting the pressure of the spring 44, so that the torque limiter functions.

Consequently, when the motor in the drive state is stopped and rotation of the motor shaft 11 is stopped, by lowering the torque of the motor shaft 11, if the inertia on the output shaft 10 side increases (reaction from stopping of the motor shaft 11), the rotation of the output shaft 10 precedes the carrier 15, and by this preceding action, mutual play angles θ move reversely to return the operation pin 29 to the neutral position. Thus the operation pin 29 presses the inner circumference 32 of the locking ring 21 to the eccentric position side by its conical side, and its leading end is urged into the engagement hole 33 of the holding plate 22. As a result, the locking ring 21 is engaged with the gear 26 of the internal gear 16, so as to lock.

Therefore, when the motor shaft 11 stops rotation of the output shaft 10 is stopped immediately, eliminating rotation by inertia, thus enhancing the safety of the tool.

Incidentally, when the rotation by inertia of the output shaft 10 exceeds the elastic force by the spring 44, the internal gear 16 turns by resisting the pressure of the spring 44, so that the torque limiter functions.

In this embodiment, by forming the rough surface 40 of the inner end side of the internal gear 16 in a flat plane, and replacing the ball 41 with a brake pad, a brake mechanism is composed in the corresponding area, and the torque limiter may take the form of a brake mechanism.

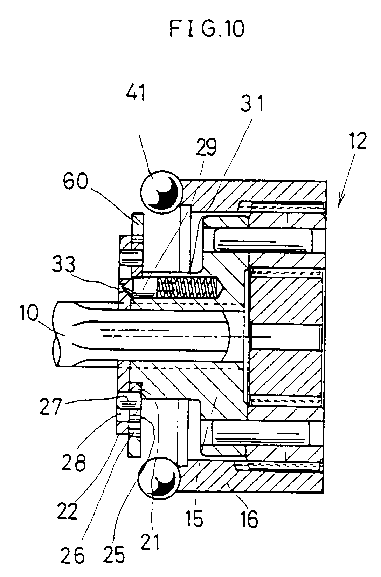

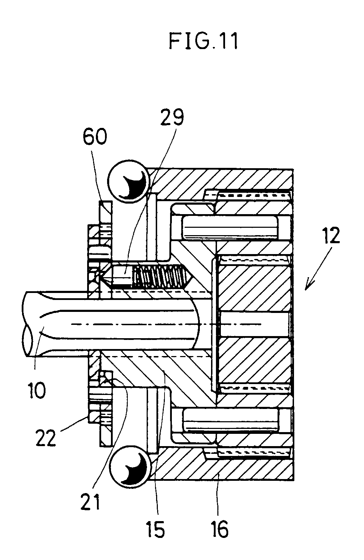

Fig. 10 and Fig. 11 illustrate another embodiment, in which an internal ring 60 forms a gear 26 to be engaged with the gear 25 of the locking ring 21, and is disposed in the inner circumference, facing the outer circumference of the locking ring 21. This internal ring 60 is fixed to member 43 (Fig. 1).

In the embodiment shown in Fig. 1, a torque limiting function can be engaged by the engagement of the gear 26 of the internal gear 16 with the gear 25 of the locking ring. However, the second embodiment lacks this function. Other constituent elements having the same functions are identified with same reference numerals, and their explanations are omitted.

## Claims

1. A locking device (20) on the output shaft of a power tool, wherein the output shaft is formed by connection of a drive shaft (11,15) and a coaxial driven shaft (10),
a rotational play of a specific angle being allowed between the drive shaft (11,15) and the driven shaft (10),
a holding plate (22) being fixed to the driven shaft (10) facing said drive shaft (11,15) in the axial direction,
an annular locking ring (21) mounted at the holding plate side facing said drive shaft (11,15) and having on the side facing the holding plate (22), a plurality of regulation pins (27) which loosely fit corresponding regulation holes (28) in the holding plate (22) on its side facing the regulation pins (27), whilst allowing the locking ring (21) to be movable between the concentric and eccentric positions, the locking ring (21) having a locking pawl (25) on an outer circumference thereof,
a locking member (29) being provided in the drive shaft (11,15) facing said locking ring (21), for allowing the locking ring (21) to move to the concentric position when the play at the junction of the drive shaft (11,15) and driven shaft (10) is eliminated by initial rotation of the drive shaft (11,15), and causing the locking ring (21) to move to the eccentric position when rotation of the drive shaft (11,15) is stopped and a play at the junction of said shaft is reintroduced, and
an internal ring (16) forming a pawl for locking mutual rotation by mutual engagement with the locking pawl (25) on the locking ring (21) when said locking ring (21) is moved to the eccentric position.

2. A locking device as claimed in claim 1, wherein said internal ring (16) is rotatably mounted, and
a torque limiter is formed by pressing and fixing said internal ring (16) with a specified load.

3. A locking device as claimed in claim 1, wherein said internal ring is rotatably mounted, and a brake is formed by pressing and fixing said internal ring with a specified load.

## Patentansprüche

1. Eine Arretierungseinrichtung (20) am Ausgangsschaft eines Kraftwerkzeuges, wobei der Ausgangsschaft geformt ist durch die Verbindung zwischen einem Antriebsschaft (11, 15) und einem koaxialen angetriebenen Schaft (10),
ein Rotationsspiel eines spezifischen Winkels, welcher zwischen dem Antriebsschaft (11, 15) und dem angetriebenen Schaft (10) erlaubt ist,
eine mit dem angetriebenen Schaft (10) verbunde, in axiale Richtung zu besagtem Antriebsschaft (11, 15) weisende Halteplatte (22),
einen rundumlaufenden, an der Halteplattenseite montierten Arretierungsring (21), welcher zu besagtem Antriebsschaft (11, 15) weist, und auf der der Halteplatte (22) zuweisenden Seite eine Vielzahl von Regulierungspins (27) aufweist, welche lose mit in der Halteplatte (22) angeordneten, korrespondierenden Regulierungslöchern (28) zusammenwirken, welche zu den Regulierungspins (27) hinweisen, während es dem Arretierungsring (21) ermöglicht ist, zwischen der konzentrischen und der exzentrischen Position beweglich zu sein, wobei der Arretierungsring (21) eine Arretierungsklinke (25) an seinem äußeren Umfang aufweist,
ein Arretierungsteil (29) welches im Antriebsschaft (11, 15) zu besagtem Arretierungsring (21) weisend angeordnet ist, um es dem Arretierungsring (21) zu ermöglichen sich zu der konzentrischen Position zu bewegen wenn das Spiel der Verbindung des Antriebsschaftes (11, 15) und des angetriebenen Schaftes (10) durch eine einleitende Rotation des Antriebsschaftes (11, 15) eliminiert ist, und den Arrtierungsring (21) veranlasst sich in die exzentrische Position zu bewegen wenn die Drehung des Antriebsschaftes (11, 15) gestoppt wird und ein Spiel in der Verbindung von besagtem Schaft wieder zurückgestellt ist, und
ein interner Ring (16), welcher eine Klinke für die Arretierung einer gegenseitigen Rotation durch gegenseitiges Ineinandergreifen der Arretierungsklinke (25) in den Arretierungsring (21) ausbildet, wenn besagter Arretierungsring (21) in die exzentrische Position bewegt ist.

2. Eine Arretierungseinrichtung wie in Anspruch 1 beansprucht, wobei besagter interner Ring (16) drehbar montiert ist, und
ein Drehmomentbegrenzer durch Pressen und Fixieren besagtem internen Ringes (16) mit einer spezifizierten Belastung ausgebildet ist.

3. Eine Arretierungseinrichtung wie in Anspruch 1 beansprucht, wobei besagter interner Ring drehbar montiert ist, und eine Bremse durch Pressen und Fixieren besagtem internen Ringes mit einer spezifizierten Belastung gebildet wird.

## Revendications

1. Un dispositif de verrouillage (20) sur l'arbre mené d'un outil mécanique, dans lequel l'arbre mené est formé par raccordement d'un arbre menant (11,15) et d'un arbre mené coaxial (10),
un jeu rotatoire à angle spécifique étant admissible entre l'arbre menant (11,15) et l'arbre mené (10),
une plaque de maintien (22) étant fixée sur l'arbre mené (10), qui fait face audit arbre menant (11,15) dans la direction axiale,
une bague d'arrêt annulaire (21) montée sur le côté de la plaque de maintien qui fait face audit arbre menant (11,15) et qui est dotée, sur le côté qui fait face à la plaque de maintien (22), d'une pluralité de goupilles de réglage (27) qui s'adaptent de façon lâche dans des trous de réglage (28) correspondants dans la plaque de maintien (22) sur son côté qui fait face aux goupilles de réglage (27), tout en rendant possible un mouvement de la bague d'arrêt (21) entre les positions concentrique et excentrique, la bague d'arrêt (21) étant dotée d'un cliquet de retenue (25) sur sa circonférence extérieure,
un élément de verrouillage (29), prévu dans l'arbre menant (11,15) face à ladite bague d'arrêt (21), permet à la bague d'arrêt (21) de se mouvoir jusqu'à la position concentrique lorsque le jeu présent à la jonction entre l'arbre menant (11,15) et l'arbre mené (10) est éliminé par la rotation initiale de l'arbre menant (11,15), et fait mouvoir la bague d'arrêt (21) jusqu'à la position excentrique lorsque la rotation de l'arbre menant (11,15) cesse et qu'un jeu est réintroduit à la jonction dudit arbre, et
une bague intérieure (16) qui forme un cliquet pour bloquer la rotation mutuelle par mise en prise mutuelle avec le cliquet de retenue (25) sur la bague d'arrêt (21) lorsque ladite bague d'arrêt (21) est déplacée jusqu'à la position excentrique.

2. Un dispositif de verrouillage selon la revendication 1, dans lequel ladite bague intérieure (16) est montée de façon rotatoire, et
un limiteur de couple est formé par pression et fixation de ladite bague intérieure (16) avec une charge spécifiée.

3. Un dispositif de verrouillage selon la revendication 1, dans lequel ladite bague intérieure est montée de façon rotatoire, et un frein est formé par pression et fixation de ladite bague intérieure avec une charge spécifiée.
